# EUROPÄISCHE PATENTSCHRIFT

(11) **EP 2 167 768 B1**
(45) Veröffentlichungstag und Bekanntmachung des Hinweises auf die Patenterteilung: **14.06.2017**
(21) Anmeldenummer: 08784591.3
(22) Anmeldetag: 02.07.2008
(51) Int. Cl.: E05C 9/00, F16B 37/08

(54) **STANGENFÜHRUNG FÜR EIN STANGENVERSCHLUSS**
GUIDE FOR ESPAGNOLETTE BAR
GUIDE POUR TRINGLE DE CRÉMONE

(30) Priorität: 18.07.2007 DE 202007009997 U; 05.10.2007 DE 202007013934 U
(43) Veröffentlichungstag der Anmeldung: 31.03.2010
(73) Patentinhaber: DIRAK Dieter Ramsauer Konstruktionselemente GmbH, 58256 Ennepetal (DE)
(72) Erfinder: RAMSAUER, Dieter, 58332 Schwelm (DE); GORONTZI, Armin, 58313 Herdecke (DE); HÖSCHLER, Peter, 42553 Velbert (DE)
(74) Vertreter: Stratmann, Ernst
(86) Internationale Anmeldenummer: PCT/EP2008/005379
(87) Internationale Veröffentlichungsnummer: WO 2009/010187

(56) Entgegenhaltungen:
- EP-A- 0 035 175
- EP-A- 1 655 418
- EP-A- 1 683 937
- WO-A-2006/123844
- DE-C- 830 717
- DE-U1- 29 822 793
- DE-U1-202005 015 135

## Beschreibung

### Technisches Gebiet

Die Erfindung betrifft eine Stangenführung für eine bezüglich der Befestigungsebene aufrecht stehend zu führende Stange eines Stangenverschlusses.

### Stand der Technik

Eine Stangenführung gemäß der oben genannten Art ist bereits aus der DE 30 07 488 bekannt, siehe beispielsweise dort die Figur 2. Weiterhin, offenbart z.B. DE 20 2005 015135 U1 eine Stangenführung gemäß dem Oberbegriff des Anspruchs 1.

### Aufgabe der Erfindung

Aufgabe der Erfindung ist es, eine Stangenführung für ein bezüglich der Befestigungsebene aufrecht stehend zu führendee Stange eines Stangenverschlusses zu schaffen, die schneller montiert werden kann, insbesondere dadurch, dass ohne langes Schrauben oder mit nur wenigen Drehbewegungen eine genaue Montage erfolgt.

### Lösungswege

Gelöst wird die Aufgabe dadurch, dass die Gewindebohrung durch einen axialen Schlitz derart seitlich geöffnet ist, das der Block auch seitlich auf den Gewindebolzen aufgesteckt werden kann.

Dadurch wird vermieden, dass eine große Anzahl von Umdrehungen gemacht werden muss, bis der Block seine Arbeitsstellung erreicht hat. Gleichwohl ist es möglich durch wenige Drehungen eine Feineinstellung des Blockes bezüglich der Auflagefläche, von der der Bolzen, insbesondere Stehbolzen, ausgeht durchzuführen.

Gemäß einer Weiterbildung der Erfindung ist die seitliche Öffnung derart ausgestaltet, dass der Block nach dem seitlichen Aufschieben in der Gewindebohrung auf dem Bolzen verrastet. Das vergrößert die Sicherheit, dass der Block auf dem Bolzen stecken bleibt, auch wenn der Block belastet wird, beispielsweise durch eine von ihm geführte Treibstange.

Günstig ist es auch, wenn die sich gegenüber liegenden Flächen des Schlitzes die Gewinderillen der Bohrung fortsetzen. Das erleichtert das Einschieben und genaue Positionieren des Blockes auf den Gewindebolzen.

Die Rasteinrichtung kann durch eine Verengung in der seitlichen Öffnung gebildet sein, was deswegen geht, weil der Block vornehmlich aus Kunststoff besteht.

Dieser Kunststoff ist ausreichend nachgiebig, um eine Rastwirkung zu erlangen.

Diese Rasteinrichtung kann auch durch am oberen und/oder unterem Ende der Gewindebohrung separat angeordnete Nasen gebildet sein. Das gilt insbesondere auch dann, wenn der Block aus einem wenig nachgiebigen Material, z. B. Metall, besteht.

Die Gewindebohrung kann eine Sackbohrung sein, und das offene Ende kann einen gewindefreien zurückspringenden Bereich aufweisen. Von diesem können Federbeine nach innen vorspringen, die beim seitlichen Einschieben eines Bolzenendes hinter das Lumen der Gewindebohrung zurückweicht und bei Erreichen der Endlage des Einschubweges des Bolzenendes in der Gewindebohrung derart zurückspringen, dass der Bolzen in der Endlage festgehalten wird.

Andererseits kann die Gewindebohrung auch eine Durchgangsbohrung sein.

Der Block kann am unteren Ende eine fußartige Verbreiterung aufweisen, die eine U-förmige Auflagefläche für das Aufliegen des Blockes auf einer Wand um den Stehbolzen herum bildet, mit Rücksprüngen zur Aufnahme von eventuellen Schweißresten oder Vernietungsvorsprüngen.

Der Block kann Teil eines auf der Wandfläche zu befestigenden Beschlages oder sonstigen Funktionselementes sein.

Der Block kann an einer Seite einen Beschlag oder sonstiges Funktionselement tragen oder bilden.

Der Block kann selbstsichernde Federeinrichtungen als Rastmittel aufweisen.

So ist es möglich, dass der Block zur Materialersparnis aus dünnen Wänden und Zwischenwänden aufgebaut ist.

Besonders aktuell ist z.B. ein Befestigungselement, das eine Stangenführung für eine bezüglich der Befestigungsebene aufrecht stehend zu führende Flachbandstange eines Stangenverschlusses oder dgl. ist, der insbesondere für Montage im Verkantungsraum von Blechschranktüren vorgesehen ist und bei dem die Flachbandstange nicht oder nur umständlich demontierbare Verriegelungsmittel trägt, wobei die Stangenführung einen Block umfasst, der die Bohrung für einen senkrecht zur Befestigungsebene sich erstreckenden Befestigungsbolzen und parallel zur Befestigungsebene an einer Seite des Blockes, an der von der Befestigungsebene fern liegenden Oberkante und an der zur Befestigungsebene nahe liegender Unterkante je einen Vorsprung zum Umgreifen der beiden Schmalkanten der Flachbandstange aufweist. Der an der Unterkante angeordnete Vorsprung kann zwei in Richtung der Stangenlängsachse sich schräg nach oben erstreckende Flügel federnd tragen, die die Schmalkante der Flachbandstange umgreifende Einschnitte aufweisen.

Günstig ist es, wenn der Einschnitt am innerem zum Block weisenden Ende des Flügels angeordnet ist.

Die innere Seite des Einschnitts kann von der Blockwand (Vorderseite des Blocks) gebildet werden, von der die Vorsprünge ausgehen.

Der Block kann aus nachgiebigem Material, wie Kunststoff bestehen und die Flügel mit dem Vorsprung einstückig mit dem Block gespritzt sein.

Der Vorsprung mit den Flügeln kann aber auch eine die Federkraft und Abriebfestigkeit verstärkende Auflage aus Federmetall, wie Federstahl aufweisen.

Schließlich kann der Vorsprung mit den Flügeln aus Federmetall, wie Federstahl bestehen und im Block verankert sein.

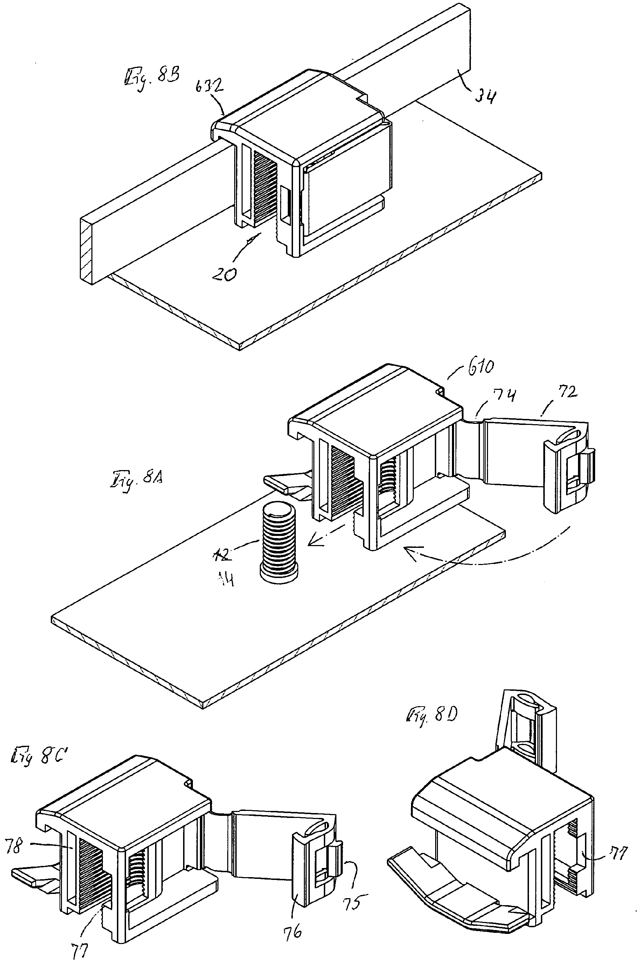

Bei einer noch anderen Ausführungsform ist der seitliche Schlitz durch einen am Befestigungselement durch ein Filmscharnier angelenkten Kunststoffstreifen derart verschließbar, dass der Bolzen durch den Streifen in der Gewindebohrung gehalten wird. (Fig. 8A - 8D).

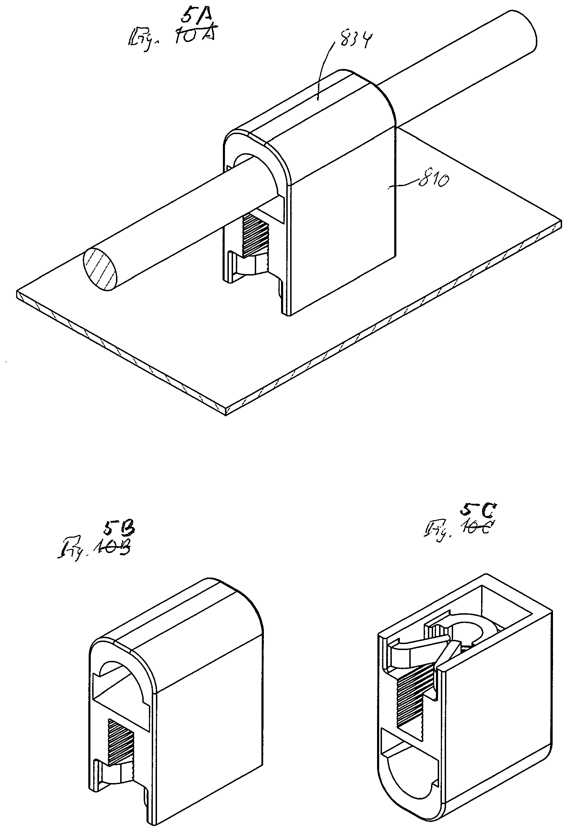

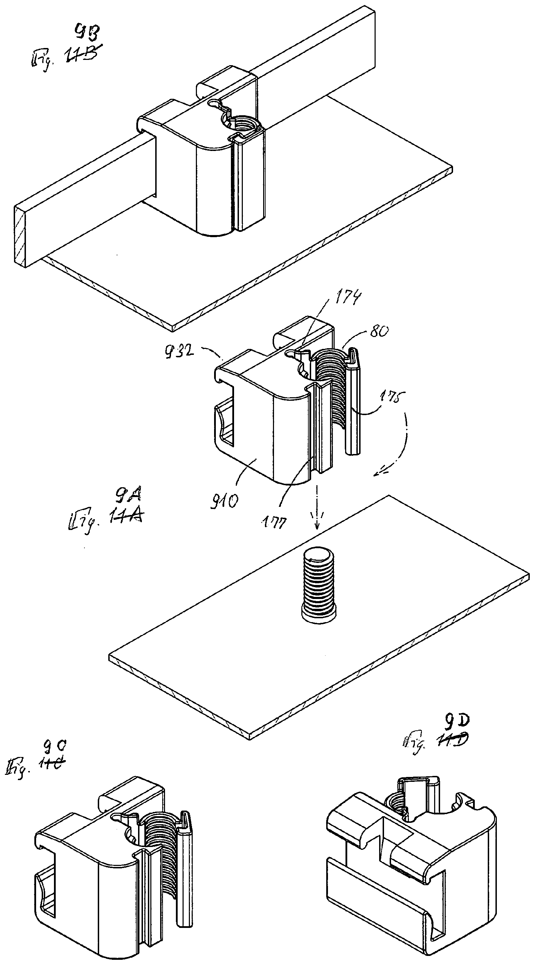

Der Beschlag kann auch eine Stangenführung für eine Rundstange und/oder für eine bezüglich der Befestigungsebene liegend zu führende Flachbandstange eines Stangenverschlusses sein, welche Stangen durch die Stangenführung axial hindurchschiebbar sind, wobei die Stange seitlich zur Gewindebohrung (Fig.9A bis 9C) oder oberhalb der Gewindebohrung (Fig. 5A bis 5C) zu liegen kommt.

Gemäß einer weiteren Ausführungsform ist der seitliche Schlitz durch ein mittels Filmscharnier wegklappbar gestaltetes Gewindeteil gebildet. (Fig. 9A bis 9D).

Nach einer weiteren Ausführungsform sind bei dem Befestigungselement anstelle der Gewindebohrung eine Bohrung und anstelle des seitlichen axialen Schlitzes von der Bohrungswand vorspringende, federnde Zungen vorgesehen, die in die Gewindegänge des Bolzens eingreifen und derart ausgerichtet sind, dass der Block zwar auf den Bolzen axial aufschiebbar ist, aber nicht wieder abziehbar ist.

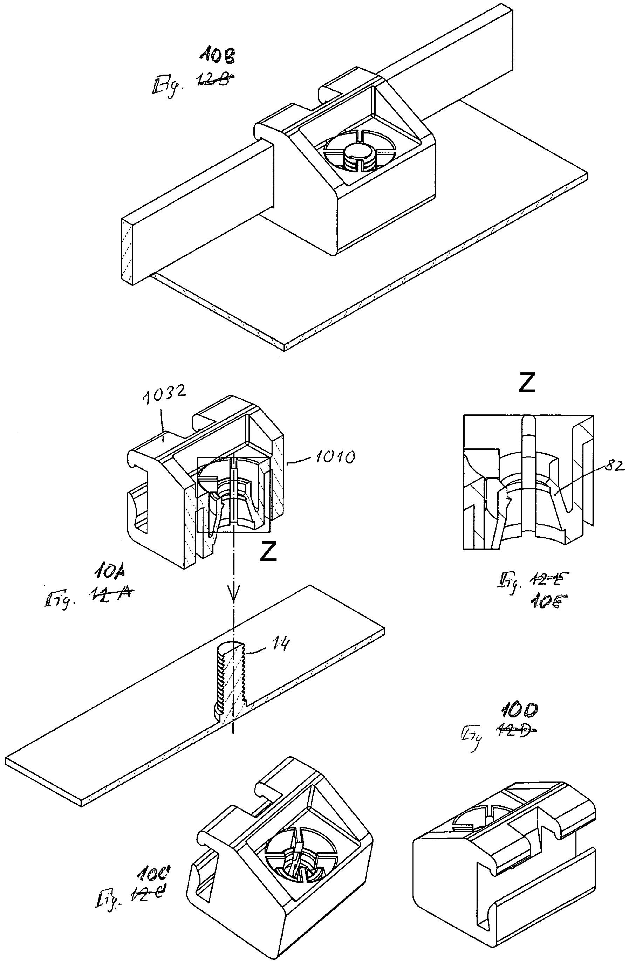

Bei einer derartigen Ausbildung kann der Block aus Kunststoff bestehen und die Zungen mit dem Block gespritzt sein (Fig. 10A bis 10E).

### Kurze Beschreibung der Zeichnungen

Die Erfindung wird nachfolgend anhand von Ausführungsbeispielen näher erläutert, die in den Zeichnungen dargestellt sind.

Es zeigt:
- Fig. 1A: eine perspektivische Ansicht von oben auf eine Wand mit einem Gewinde mit Stehbolzen, auf den eine erfindungsgemäße Befestigungseinrichtung seitlich aufgeschoben werden kann;
- Fig. 1B: eine Schnittansicht der Befestigungseinrichtung in der aufgeschobenen Stellung;
- Fig. 1C und 1D: in zwei perspektivischen Ansichten das Befestigungselement der Fig. 1A und 1 B;
- Fig. 2A bis 2C: in ähnlichen Ansichten wie Fig. 1A bis 1D eine Ausführungsform, bei der das Befestigungselement eine Stangenführung hält, bei der die Stange seitlich eingeschoben werden kann;
- Fig. 3A bis 3C: in ähnlichen Ansichten wie Fig. 2A bis 2D eine am Befestigungselement angebrachte Stangenführung, bei der die Stange von oben eingesteckt werden kann;
- Fig. 4A bis 4C: in drei Ansichten eine Ausführungsform einer Stangenführung zur Gleitlagerung von Rund- oder parallel zur Befestigungsfläche ausgerichteten Flachbandstangen neben dem Bolzen;
- Fig.5A bis 5C: in drei Ansichten eine Ausführungsform einer Stangenführung zur Gleitlagerung von Rund- oder parallel zur Befestigungsfläche ausgerichteten Flachbandstangen über dem Bolzen;
- Fig. 6A bis 6D: in analogen Darstellung das Befestigungselement gemäß den Fig. 1A bis 1D in Form einer Flachbandstangenführung für aufrecht stehende Führung und Einstecken von oben;
- Fig. 7A bis 7D: wiederum in analogen Darstellungen eine Ausführungsform einer Flachbandstangenführung zum Einstecken von der Seite, wobei Fig. 7E eine abgeschnittene Ansicht zeigt;
- Fig. 8A bis 8D: in analogen Darstellungen wie Fig. 7A bis 7D eine weitere Ausführungsform einer Flachbandstangenführung mit einer klappenförmigen Schließeinrichtung;
- Fig. 9A bis 9D: in Ansichten ähnlich der Fig. 8A bis 8D eine weitere Ausführungsform einer auch axial auf den Bolzen aufsteckbaren Flachbandstangenführung mit einem mittels Filmscharnier wegklappbaren Gewindebohrungsteil;
- Fig. 10A bis 10D: in Ansichten ähnlich der Fig. 9A bis 9D eine nur axial auf den Bolzen aufsteckbare Flachbandstangenführung mit Kunststoffzungen, wobei
- Fig. 10E: ein vergrößerter Ausschnitt aus Fig. 10A ist;

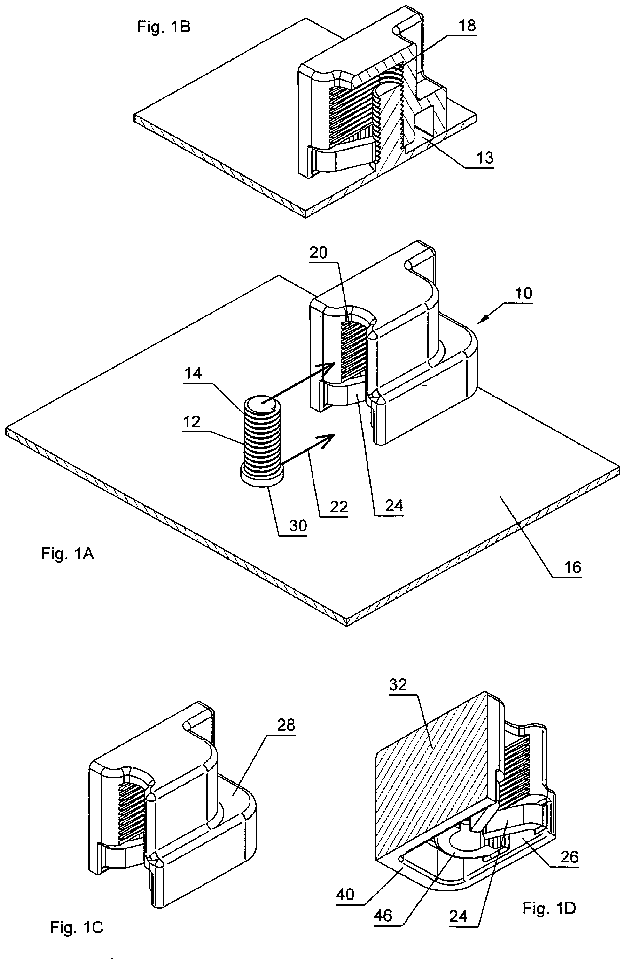

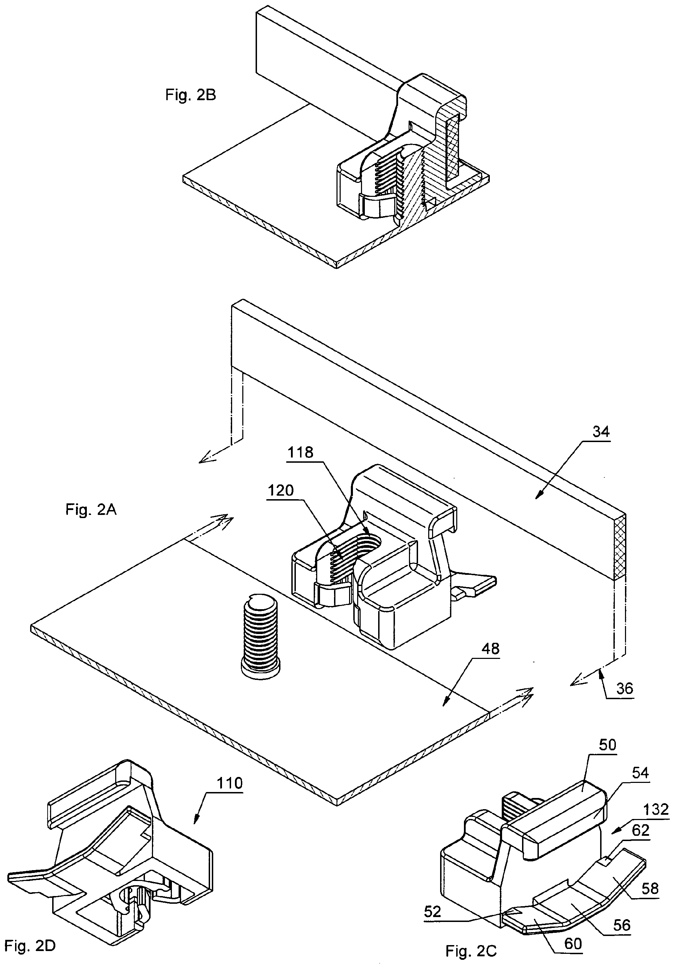

Fig. 1A zeigt perspektivisch ein Befestigungselement 10 zum Zusammenwirken mit einem mit Gewinde 12 versehenen Bolzen 14, hier in Form eines auf einem Blech 16 aufgeschweißten oder aufgenieteten Stehbolzens 14. Das Befestigungselement umfasst eine Gewindebohrung 18, besteht aus Kunststoff und besitzt einen axialen Schlitz 20, der derart seitlich geöffnet ist, das der Block auch seitlich auf den Gewindebolzen 12 aufgesteckt werden kann bzw. der Bolzen in den Schlitz eingeführt werden kann, welche Bewegungen durch die Pfeile 22 angedeutet ist. Wie Figuren 1A und 1B erkennen lassen, handelt es sich hier bei der Gewindebohrung 18 um eine Sackbohrung, während bei der Ausführungsform gemäß Fig. 2A bis 2D eine Durchgangsbohrung vorgesehen ist, deren Bezugszahl ist 118.

Um zu verhindern, dass der Bolzen auf der seitlichen Öffnung wieder heraustritt, ist die seitliche Öffnung derart ausgestaltet, dass der Block 10 bzw. 110 nach dem seitlichen Aufschieben auf dem Bolzen auf diesem verrastet. Dazu kann der Block so ausgestaltet sein, dass die sich gegenüber liegenden Flächen des Schlitzes 20 eine Verengung bilden. Um gleichwohl den Bolzen ohne Probleme einschieben zu können, ist es günstig, die sich gegenüberliegenden Flächen des Schlitzes mit Gewinderillen zu versehen, die die Gewinderillen der Bohrung fortsetzen.

Alternativ oder zusätzlich kann die Rasteinrichtung durch am oberen und/oder am unteren Ende der Gewindebohrung angeordnete Nasen 24, gebildet sein. Gemäß Fig. 1A ist die Gewindebohrung 18 eine Sackbohrung und das offene Ende weist einen gewindefreien zurückspringenden Bereich 26 auf, von dem Federbeine 24 nach innen vorspringen, wie Fig. 1C deutlich werden lässt. Diese Federbeine 24 weichen beim seitlichen Einschieben eines Bolzenendes 12 hinter das Lumen der Gewindebohrung 18 zurück und springen bei Erreichen der Endlage des Einschubweges des Bolzenendes in der Gewindebohrung derart zurück, dass der Bolzen in der Endlage festgehalten wird.

Der Block kann am unteren Ende eine fußartige Verbreiterung 28 aufweisen, die eine U-förmige Auflagefläche für das Aufliegen des Blockes auf einer Wand 16 um den Stehbolzen 14 herum bildet, mit Rücksprüngen 13 zur Aufnahme von eventuellen Schweißresten oder Vernietungsvorsprüngen 30.

Der Block 10 kann Teil eines auf der Wandfläche 16 zu befestigenden Beschlages oder sonstigen Funktionselementes sein, wobei in Fig. 1D nur die Fläche 32 zu erkennen ist, auf der sich ein derartiger Beschlag oder Funktionselement befindet.

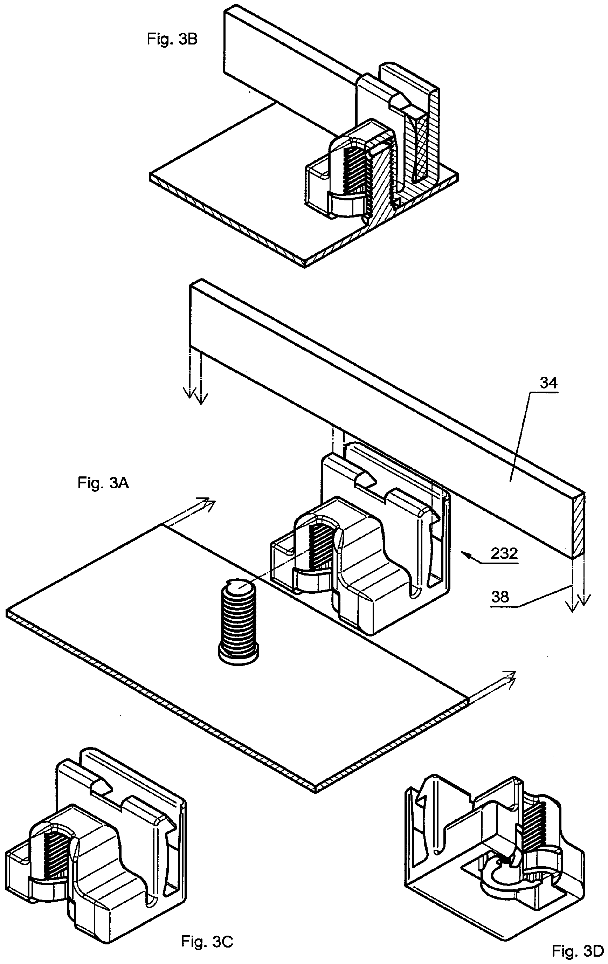

So ist bei den Fig. 2A bis 2D anstelle dieser Wandfläche 32 eine Stangenführung 132 vorgesehen, in die eine Flachbandstange 34 seitlich eingeschoben werden kann, siehe die Pfeile 36. Bei der Ausführungsform gemäß den Fig.3A bis 3D dagegen von oben, siehe die Pfeile 38 in Fig. 3A.

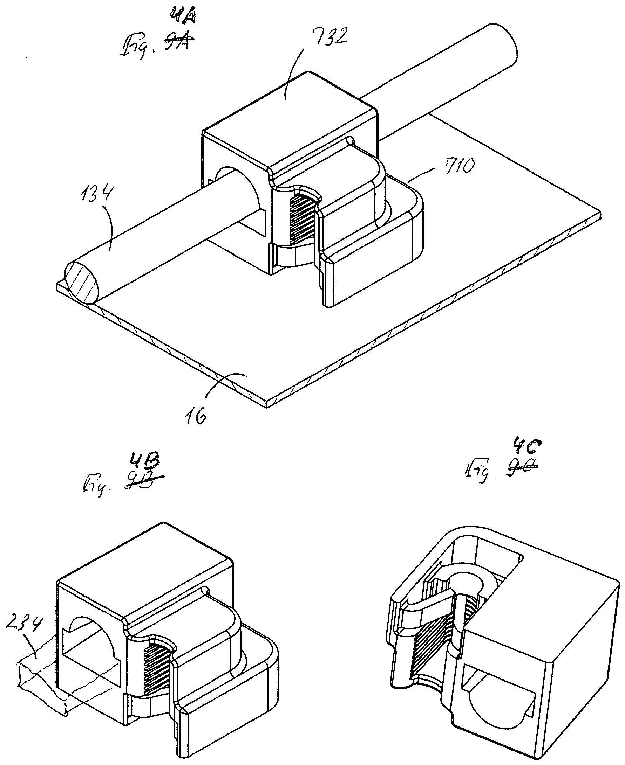

Bei der Ausführungsform gemäß den Fig. 4 und 5 hat der Block 310 die Funktion einer Schraubenmutter mit hier Sechskantumfang. Nach dem Aufschieben auf einen Bolzen mit entsprechendem Gewinde, siehe den Pfeil 40, lässt sich die Mutter 310 drehen, siehe Pfeil 42, um die Mutter entlang des Bolzens 312 zu verschieben, siehe Pfeil 44.

Bei den Nasen oder Federbeinen 24, 124, 224, 324 handelt es sich um selbstsichernde Federeinrichtungen, die als Rastmittel dienen.

Der Block kann zur Materialersparnis aus dünnen Wänden und Zwischenwänden aufgebaut sein, siehe die Fig. 1D mit den Wänden 40, 46.

Besonders aktuell ist z.B. ein Befestigungselement gemäß Fig. 2A bis 2D, dass eine Stangenführung für eine bezüglich der Befestigungsebene aufrecht stehend zu führende Flachbandstange 34 eines Stangenverschlusses oder dgl. ist, der insbesondere für Montage im Verkantungsraum von Blechschranktüren vorgesehen ist und bei dem die Flachbandstange nicht oder nur umständlich demontierbare Verriegelungsmittel trägt, wobei die Stangenführung einen Block 110 umfasst, der die Bohrung 118 für einen senkrecht zur Befestigungsebene 48 sich erstreckenden Befestigungsbolzen 114 und parallel zur Befestigungsebene 48 an einer Seite des Blockes 110, an der von der Befestigungsebene 48 fern liegenden Oberkante 50 und an der zur Befestigungsebene nahe liegender Unterkante 52 je einen Vorsprung 54, 56 zum Umgreifen der beiden Schmalkanten der Flachbandstange 34 aufweist. Der an der Unterkante angeordnete Vorsprung 56 kann zwei in Richtung der Stangenlängsachse sich schräg nach oben erstreckende Flügel 58, 60 federnd tragen, die die Schmalkante der Flachbandstange umgreifende Einschnitte 62 aufweisen.

Günstig ist es, wenn der Einschnitt 62 am innerem zum Block 110 weisenden Ende des Flügels 58, 60 angeordnet ist.

Die innere Seite des Einschnitts 62 kann von der Blockwand (Vorderseite des Blocks 110) gebildet werden, von der die Vorsprünge 56, 58, 60 ausgehen.

Der Block kann aus nachgiebigem Material, wie Kunststoff bestehen und die Flügel 58, 60 mit dem Vorsprung 56 einstückig mit dem Block 110 gespritzt sein.

Der Block kann aber auch aus einem nicht nachgiebigen Material, z.B. Metall, bestehen, was den Vorteil der höheren Festigkeit hat.

Der Vorsprung mit den Flügeln kann aber auch eine die Federkraft und Abriebfestigkeit verstärkende Auflage aus Federmetall, wie Federstahl aufweisen, nicht dargestellt.

Schließlich kann der Vorsprung mit den Flügeln aus Federmetall, wie Federstahl bestehen und im Block verankert sein, nicht dargestellt.

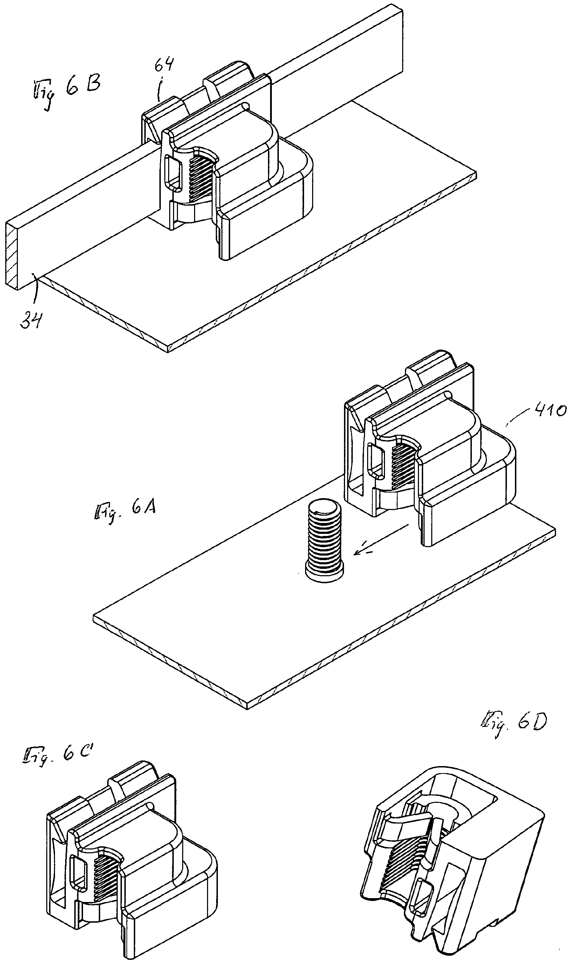

Fig. 6A bis 6D zeigen in analoger Darstellung das Befestigungselement 10 gemäß den Fig. 1A bis 1D in Form einer Flachbandstangenführung 410 für aufrecht stehende Führung der Stange 34, die von oben in die durch zwei seitlich wegdrückbare Haken 64 gebildete Führung einsteckbar ist.

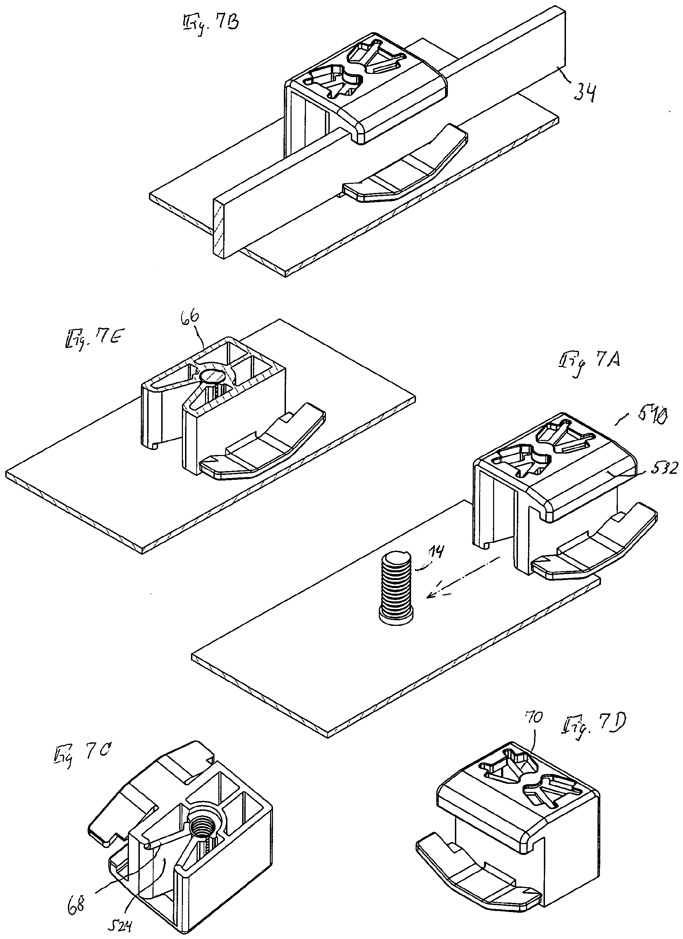

Fig. 7A bis 7D zeigen wiederum in analogen Darstellungen eine Ausführungsform einer Flachbandstangenführung 532 ähnlich der in Fig. 2A bis 2D gezeigten zum Einstecken der Flachbandstange 34 von der Seite her, wobei Fig. 7E eine abgeschnittene Ansicht zeigt, um den klemmenden Aufbau des Blockprofils 66 zu zeigen. Die Federbeine 524 sind zur Wahrung ihrer Nachgiebigkeit beidendig freigestellt, sie den Rücksprung 68 und den Durchbruch 70.

Beim Aufschieben des Blockes, hier in Form einer Stangenführung 510, auf den Gewindebolzen 14 federn die Federbeine 524 nach außen, um in die in Fig.7E dargestellte verriegelnde Stützposition zurückzuspringen, wenn der Bolzen 14 seine Endstellung in dem Block 510 erreicht hat. Eine Entriegelung ist nur mittels eines Werkzeugs, z.B. mittels eines Schraubendrehers möglich, der mit seiner Klinge durch den passenden Durchbruch 70 hindurch reichend es ermöglicht, die Federbeine 524 auseinander zu drücken und ein Abziehen des Blockes 510 von dem Bolzen 14 zu ermöglichen. Der Durchbruch 70 erlaubt außerdem eine Sichtkontrolle des Verriegelungszustandes.

Fig. 8A bis 8D zeigen in analogen Darstellungen wie Fig. 7A bis 7D eine weitere Ausführungsform einer Flachbandstangenführung 632 mit einer klappenförmigen Schließeinrichtung 72, die mittels Filmscharnier 74 am Befestigungselement 610 angelenkt ist und in eingeklappter Stellung, Fig. 8B, mittels einer Arretierungsleiste 75 verriegelbar ist, die von einem Rücksprung 77 im Block 610 aufnehmbar ist. Dabei drückt die Fläche 76 gegen den Bolzen 14.

In dem Zustand der Fig. 8B, also mit verschlossener Klappe 72, wie auch im Zustand der Fig. 8A, also mit geöffneter Klappe 72 kann der Block 610 seitlich auf den Bolzen 14 aufgeschoben werden. Ein Abziehen ist dagegen nur bei geöffneter Klappe 72 möglich.

Fig. 4A bis 4C zeigen in drei Ansichten eine Ausführungsform einer Stangenführung 732 zur axialen Gleitlagerung von Rundstangen 134 oder parallel zur Befestigungsfläche 16 ausgerichteten Flachbandstangen 234 neben dem Bolzen, Fig. 8A bis 8C in drei Ansichten eine Ausführungsform einer Stangenführung 832 zur Gleitlagerung von Rund- oder parallel zur Befestigungsfläche ausgerichteten Flachbandstangen über dem Bolzen.

Fig. 9A bis 9D in Ansichten ähnlich der Fig. 8A bis 8D eine weitere Ausführungsform einer auch axial auf den Bolzen aufsteckbaren Flachbandstangenführung 932 mit einem mittels Filmscharnier 174 wegklappbaren Gewindebohrungsteil 80, der wiederum mittels einer Arretierungsleiste 175 verriegelbar ist, die von einer Nut 177 im Block 910 aufnehmbar ist.

Fig. 10A bis 10D zeigen in Ansichten ähnlich der Fig. 9A bis 9D eine nur axial auf den Bolzen 14 aufsteckbare Flachbandstangenführung 1032 mit Kunststoffzungen 82, wobei Fig. 10E ein vergrößerter Ausschnitt aus Fig. 10A ist.

Dabei ist der im Kunststoff federnde Bereich mit der Bezugszahl 82 markiert. Dieser Block kann nur durch Abdrehen des Blockes von dem Gewinde des Bolzens 14 demontiert werden.

### Gewerbliche Auswertbarkeit

Die Erfindung ist im Schaltschrankbau gewerblich auswertbar.

### Bezugszeichenliste:

- 10, 110, 210, 410, 510 610, 710, 810, 910, 1010: Befestigungselement, Block
- 12: Gewinde, Bolzenende
- 13: Rücksprünge
- 14: Bolzen
- 16: Blechwand
- 18, 118: Gewindebohrung, Sackbohrung, Durchgangsbohrung
- 20: Axialer Schlitz, seitliche Öffnung
- 22: Pfeil
- 24: Nase, Federbeine
- 26: gewindefreier Bereich
- 28: fußartige Verbreiterung
- 30: Vernietungsvorsprung, Schweißreste
- 32, 132, 232, 532, 632, 732, 832, 932, 1032: Fläche für Beschlag oder Funktionselement, Stangenführung
- 34, 134. 234: Flachbandstange, Rundstange
- 36: Pfeile
- 38: Pfeile
- 40: Wand, Pfeil
- 46: Wand
- 48: Befestigungsebene
- 50: Oberkante
- 52: Unterkante
- 54: Vorsprung
- 56: Vorsprung
- 58: Flügel
- 60: Flügel
- 62: Einschnitte
- 64: Haken
- 66: Blockprofil
- 68: Rücksprung
- 70: Durchbruch
- 72: Klappenförmige Schloßeinrichtung
- 74: Filmscharnier
- 76: Fläche
- 78: Schlitz
- 80: Gewindebohrungsteil
- 82: Kunststoffzungen

## Patentansprüche

1. Stangenführung für eine bezüglich der Befestigungsebene (48) aufrecht stehend zu führenden Stange eines Stangenverschlusses, **gekennzeichnet durch** einen mit Gewindebohrung (118) versehenem Block (110), der auf einen mit Gewinde versehenen Stehbolzen (114) aufgeschraubt werden kann, wobei die Gewindebohrung (118) durch einen axialen Schlitz (120) derart seitlich geöffnet ist, dass der Block (110) auch seitlich auf den Stehbolzen (114) aufgesteckt werden kann, und durch parallel zur Befestigungsebene (48) an einer Seite des Blockes (110), an der von der Befestigungsebene (48) fern liegenden Oberkante (50) und an der zur Befestigungsebene (48) nahe liegender Unterkante (52) je einen Vorsprung (54, 56) zum Umgreifen der Stange, wie der beiden Schmalkanten einer Flachbandstange (34).

2. Stangenführung nach Anspruch 1, **dadurch gekennzeichnet, dass** der an der Unterkante (52) angeordnete Vorsprung (56) zwei in Richtung der Stangenlängsachse sich schräg nach oben erstreckende Flügel (59, 60) federnd trägt, die die Schmalkante der Flachbandstange (34) umgreifende Einschnitte (62) aufweisen.

3. Stangenführung nach Anspruch 2, **dadurch gekennzeichnet, dass** der Einschnitt (62) am innerem zum Block (110) weisenden Ende des Flügels (58, 60) angeordnet ist.

4. Stangenführung nach Anspruch 2, **dadurch gekennzeichnet, dass** die innere Seite des Einschnitts (62) von der Blockwand (46) (Vorderseite des Blocks (110)) gebildet wird, von der die Vorsprünge (56, 58, 60) ausgehen.

5. Stangenführung nach Anspruch 2, 3 oder 4, **dadurch gekennzeichnet, dass** der Block (110) aus nachgiebigem Material, wie Kunststoff besteht und die Flügel (58, 60) mit dem Vorsprung (56) einstückig mit dem Block (110) gespritzt sind.

6. Stangenführung nach Anspruch 5, **dadurch gekennzeichnet, dass** der Vorsprung (56) mit den Flügeln (58, 60) eine die Federkraft und Abriebfestigkeit verstärkende Auflage aus Federmetall, wie Federstahl aufweisen.

7. Stangenführung nach Anspruch 2, 3 oder 4, **dadurch gekennzeichnet, dass** der Block (10, 110) aus einem nicht nachgiebigen Material, wie Metall, besteht.

8. Stangenführung nach Anspruch 7, **dadurch gekennzeichnet, dass** der Vorsprung (56) mit den Flügeln (58, 60) aus Federmetall, wie Federstahl besteht und im Block (110) verankert ist.

9. Stangenführung nach einem der Ansprüche 1 bis 8, **dadurch gekennzeichnet, dass** der seitliche Schlitz (20) durch einen an der Stangenführung (610) durch ein Filmscharnier (74) angelenkten Kunststoffstreifen (72) derart verschließbar ist, dass der Bolzen (12) durch den Streifen in der Gewindebohrung gehalten wird. (Fig. 8A - 8D).

10. Stangenführung nach einem der Ansprüche 1 bis 8, **dadurch gekennzeichnet, dass** der seitliche Schlitz (20) derart ausgestaltet ist, dass der Block (10, 110, 210, 310) nach dem seitlichen Aufschieben in der Gewindebohrung (18) auf dem Bolzen (14) verrastet.

11. Stangenführung nach Anspruch 1, **dadurch gekennzeichnet, dass** die sich gegenüber liegenden Flächen des Schlitzes (20) die Gewinderillen der Bohrung (18) fortsetzen.

12. Stangenführung nach Anspruch 10 oder 11, **dadurch gekennzeichnet, dass** die Rasteinrichtung durch eine Verengung in dem seitlichen Schlitz (20) gebildet ist.

13. Stangenführung nach Anspruch 10 oder 11, **dadurch gekennzeichnet, dass** die Rasteinrichtung durch am oberen und/oder unterem Ende der Gewindebohrung angeordnete Nasen (24) gebildet wird.

14. Stangenführung nach Anspruch 1, **dadurch gekennzeichnet, dass** die Gewindebohrung eine Sackbohrung (118) ist und das offene Ende einen gewindefreien zurückspringenden Bereich (26) aufweist, von dem Federbeine (24) nach innen vorspringen, die beim seitlichem Einschieben eines Bolzenendes hinter das Lumen der Gewindebohrung (18) zurückweichen und bei Erreichen der Endlage des Einschubweges des Bolzenendes in der Gewindebohrung (12) derart zurückspringen, dass der Bolzen (14) in der Endlage festgehalten wird.

15. Stangenführung nach Anspruch 1, **dadurch gekennzeichnet, dass** die Gewindebohrung eine Durchgangsbohrung (218) ist.

16. Stangenführung nach Anspruch 14, **dadurch gekennzeichnet, dass** der Block am unteren Ende eine fußartige Verbreiterung (28) aufweist, die eine U-förmige Auflagefläche für das Aufliegen des Blockes auf einer Wand (16) um den Stehbolzen (14) herum bildet, mit Rücksprüngen zur Aufnahme von eventuellen Schweißresten oder Vernietungsvorsprüngen (30).

17. Stangenführung nach einem der Ansprüche 1 bis 16, **dadurch gekennzeichnet, dass** der Block selbstsichernde Federeinrichtungen als Rastmittel aufweist

18. Stangenführung nach einem der Ansprüche 1 bis 17, **dadurch gekennzeichnet, dass** der Block zur Materialersparnis aus dünnen Wänden und Zwischenwänden (40, 41, 46) aufgebaut ist.

19. Stangenführung nach Anspruch 1, **dadurch gekennzeichnet, dass** die Stangenführung für eine Rundstange und/oder für eine bezüglich der Befestigungsebene liegend zu führende Flachbandstange eines Stangenverschlusses vorgesehen ist, welche Stange durch die Stangenführung axial hindurchschiebbar ist, wobei die Stange seitlich zur Gewindebohrung (Fig. 4A bis 4C) oder oberhalb der Gewindebohrung (Fig. 5A bis 5C) zu liegen kommt.

20. Stangenführung nach Anspruch 1, 10 oder 11, **dadurch gekennzeichnet, dass** der seitliche Schlitz (20) derart ausgestaltet ist, das der Block (10, 110, 210, 310) nach dem seitlichen Aufschieben in der Gewindebohrung (18) auf dem Bolzen (14) verrastet.

## Claims

1. A rod guide for a rod of a rod lock, said rod being intended to be guided in an upright manner relative to the mounting plane (48), **characterised by** a block (110) which is equipped with a threaded bore (118) and which can be screwed onto a stay bolt (114) which is equipped with a thread, wherein the threaded bore (118) is laterally open by an axial slot (120) such that the block (110) can also be laterally fitted onto the stay bolt (114), and by protrusions (54, 56) located parallel to the mounting plane (48), on one side of the block (110), one being located on the upper edge (50) which is remote from the mounting plane (48), and one being located on the lower edge (52) which is near to the mounting plane (48), for gripping the rod, such as the two narrow edges of a flat strip rod (34).

2. The rod guide according to Claim 1, **characterised in that** the protrusion (56) arranged on the bottom edge (52) resiliently bears two wings (59, 60) which extend diagonally upwards towards the longitudinal axis of the rod, and which have notches (62) that grip the narrow edges of the flat strip rod (34).

3. The rod guide according to Claim 2, **characterised in that** the notch (62) is arranged on the inner end of the wing (58, 60) which points towards the block (110).

4. The rod guide according to Claim 2, **characterised in that** the inner side of the notch (62) is formed by the block wall (46) (front side of the block (110)), from which the protrusions (56, 58, 60) emerge.

5. The rod guide according to Claim 2, 3 or 4, **characterised in that** the block (110) consists of flexible material, such as plastic, and the wings (58, 60) with the protrusion (56) are injection moulded integrally with the block (110).

6. The rod guide according to Claim 5, **characterised in that** the protrusion (56) with the wings (58, 60) has a support which is made of spring metal, such as spring steel, and which strengthens the spring force and wear resistance.

7. The rod guide according to Claim 2, 3 or 4, **characterised in that** the block (10, 110) consists of a non-flexible material, such as metal.

8. The rod guide according to Claim 7, **characterised in that** the protrusion (56) with the wings (58, 60) consists of spring metal, such as spring steel, and is anchored in the block (110).

9. The rod guide according to any one of Claims 1 to 8, **characterised in that** the lateral slot (20) can be sealed by a plastic strip (72), which is linked to the rod guide (610) by an integral hinge (74), such that the bolt (12) is held in the threaded bore by the strip. (Figs. 8A - 8D).

10. The rod guide according to any one of Claims 1 to 8, **characterised in that** the lateral slot (20) is configured such that the block (10, 110, 210, 310) locks onto the bolt (14) after it has been laterally slid into the threaded bore (18).

11. The rod guide according to Claim 1, **characterised in that** the opposing surfaces of the slot (20) are a continuation of the thread grooves of the borehole (18).

12. The rod guide according to Claim 10 or 11, **characterised in that** the locking device is formed by a constriction in the lateral slot (20).

13. The rod guide according to Claim 10 or 11, **characterised in that** the locking device is formed by lugs (24) arranged on the upper and/or lower end of the threaded bore.

14. The rod guide according to Claim 1, **characterised in that** the threaded bore is a blind bore (118) and the open end has an unthreaded, recessed region (26), from which there protrude inwardly spring legs (24), which retreat behind the lumen of the threaded bore (18) when a bolt end is laterally inserted, and spring back when the end position of the insertion path of the bolt end into the threaded bore (12) is reached, such that the bolt (14) is held in the end position.

15. The rod guide according to Claim 1, **characterised in that** the threaded bore is a through bore (218).

16. The rod guide according to Claim 14, **characterised in that** the block has on the lower end a foot-like expansion (28) that forms a U-shaped bearing surface around the stay bolt (14) for the block to bear on a wall (16), with recesses for accommodating any weld residues or riveting projections (30).

17. The rod guide according to any one of Claims 1 to 16, **characterised in that** the block has self-locking spring devices as locking means.

18. The rod guide according to any one of Claims 1 to 17, **characterised in that** the block is composed of thin walls and intermediate walls (40, 41, 46) to save material.

19. The rod guide according to Claim 1, **characterised in that** the rod guide is provided for a round rod and/or for a flat strip rod of a rod lock which is intended to be guided in a horizontal manner relative to the mounting plane, said rod being able to be passed axially through the rod guide, wherein the rod comes to rest to the side of the threaded bore (Fig. 4A to 4C) or above the threaded bore (Fig. 5A to 5C).

20. The rod guide according to Claim 1, 10 or 11, **characterised in that** the lateral slot (20) is configured such that the block (10, 110, 210, 310) locks onto the bolt (14) after being laterally slid into the threaded bore (18).

## Revendications

1. Guide pour une tringle d'une crémone à guider debout par rapport au plan de fixation (48), **caractérisé par** un bloc (110) pourvu d'un trou taraudé (118), qui peut être vissé sur un goujon fileté (114), le trou taraudé (118) étant ouvert latéralement par une fente axiale (120) de manière telle que le bloc (110) peut également être placé latéralement sur le goujon fileté (114), et par des parties en saillie (54, 56), destinées à entourer la tringle, telle que les deux côtés étroits d'une tringle plate (34), parallèles au plan de fixation (48), situées d'un côté du bloc (110), au niveau du côté supérieur (50) éloigné du plan de fixation (48) et au niveau du côté inférieur (52) à proximité du plan de fixation (48).

2. Guide pour tringle selon la revendication 1, **caractérisé en ce que** la partie en saillie (56) disposée au niveau du côté inférieur (52) porte avec un effet de ressort deux ailettes (58, 60) s'étendant dans le sens de l'axe longitudinal de la tringle, en biais vers le haut, qui présentent les encoches (62) entourant les côtés étroits de la tringle (34) plate.

3. Guide pour tringle selon la revendication 2, **caractérisé en ce que** l'encoche (62) est disposée au niveau de l'extrémité interne, orientée vers le bloc (110) de l'ailette (58, 60).

4. Guide pour tringle selon la revendication 2, **caractérisé en ce que** la face interne de l'encoche (62) est formée par la paroi (46) du bloc (face avant du bloc (110)) dont partent les parties en saillie (56, 58, 60).

5. Guide pour tringle selon la revendication 2, 3 ou 4, **caractérisé en ce que** le bloc (110) est constitué par un matériau souple, tel que du matériau synthétique, et les ailettes (58, 60) sont moulées par injection, avec la partie en saillie (56), en une pièce avec le bloc (110).

6. Guide pour tringle selon la revendication 5, **caractérisé en ce que** la partie en saillie (56), avec les ailettes (58, 60), présentent un revêtement en métal à ressort, tel que de l'acier à ressort, renforçant la force de rappel et la résistance à l'usure.

7. Guide pour tringle selon la revendication 2, 3 ou 4, **caractérisé en ce que** le bloc (10, 110) est constitué par un matériau non souple, tel que du métal.

8. Guide pour tringle selon la revendication 7, **caractérisé en ce que** la partie en saillie (56), avec les ailettes (58, 60), est constituée par du métal à ressort, tel que de l'acier à ressort et est ancrée dans le bloc (110).

9. Guide pour tringle selon l'une quelconque des revendications 1 à 8, **caractérisé en ce que** la fente latérale (20) peut être fermée par une bande (72) en matériau synthétique articulée sur le guide (610) pour tringle par une charnière à film (74) de manière telle que le goujon (14) est maintenu par la bande dans le trou taraudé (Figure 8A-8D).

10. Guide pour tringle selon l'une quelconque des revendications 1 à 8, **caractérisé en ce que** la fente latérale (20) est réalisée de manière telle que le bloc (10, 110, 210, 310) s'encliquète sur le goujon (14) après la mise en place latérale dans le trou taraudé (18).

11. Guide pour tringle selon la revendication 1, **caractérisé en ce que** les surfaces qui se font face de la fente (20) prolongent les rainures du taraudage du trou (18).

12. Guide pour tringle selon la revendication 10 ou 11, **caractérisé en ce que** le dispositif d'encliquetage est formé par un rétrécissement dans la fente latérale (20).

13. Guide pour tringle selon la revendication 10 ou 11, **caractérisé en ce que** le dispositif d'encliquetage est formé par des ergots (24) disposés au niveau de l'extrémité supérieure et/ou inférieure du trou taraudé.

14. Guide pour tringle selon la revendication 1, **caractérisé en ce que** le trou taraudé est un trou à poche (118) et l'extrémité ouverte présente une zone (26) en retrait sans taraudage, dont partent des pattes à ressort (24) vers l'intérieur, qui reculent lors de la mise en place latérale d'une extrémité du goujon derrière la lumière du trou taraudé (18) et qui reviennent en position lorsque la position d'extrémité de la voie d'insertion de l'extrémité du goujon dans le trou taraudé (12) est atteinte, de manière telle que le goujon (14) est maintenu dans la position finale.

15. Guide pour tringle selon la revendication 1, **caractérisé en ce que** le trou taraudé est un trou traversant (218).

16. Guide pour tringle selon la revendication 14, **caractérisé en ce que** le bloc présente au niveau de l'extrémité inférieure, un élargissement (28) en forme de pied, qui forme une surface d'appui en forme de U pour le placement du bloc sur une paroi (16) autour du goujon (14), présentant des parties en retrait pour recevoir d'éventuels restes de soudure ou d'éventuelles parties en saillie (30) de rivetage.

17. Guide pour tringle selon l'une quelconque des revendications 1 à 16, **caractérisé en ce que** le bloc présente des dispositifs à ressort autobloquants comme moyens d'encliquetage.

18. Guide pour tringle selon l'une quelconque des revendications 1 à 17, **caractérisé en ce que** le bloc, en vue d'économiser du matériau, est formé par des parois minces et des parois intermédiaires (40, 41, 46).

19. Guide pour tringle selon la revendication 1, **caractérisé en ce que** le guide pour tringle est prévu pour une tringle ronde et/ou pour une tringle plate à guider couchée par rapport au plan de fixation d'une crémone, la tringle pouvant être glissée axialement à travers le guide pour tringle, la tringle se plaçant latéralement par rapport au trou taraudé (Figure 4A à 4C) ou au-dessus du trou taraudé (Figure 5A à 5C).

20. Guide pour tringle selon la revendication 1, 10 ou 11, **caractérisé en ce que** la fente latérale (20) est réalisée de manière telle que le bloc (10, 110, 210, 310) se verrouille sur le goujon (14) après la mise en place latérale dans le trou taraudé (18).
